Europäisches Patentamt

(19) European Patent Office

Office européen des brevets

(11) Veröffentlichungsnummer: **0 179 242**
**B1**

(12) **EUROPÄISCHE PATENTSCHRIFT**

(45) Veröffentlichungstag der Patentschrift:
03.08.88

(51) Int. Cl.⁴: **C 01 B 25/237**

(21) Anmeldenummer: **85111210.2**

(22) Anmeldetag: **05.09.85**

(54) **Verfahren zur Reinigung von Phosphorsäure.**

(30) Priorität: **21.09.84  DE 3434611**

(43) Veröffentlichungstag der Anmeldung:
**30.04.86 Patentblatt 86/18**

(45) Bekanntmachung des Hinweises auf die Patenterteilung:
**03.08.88 Patentblatt 88/31**

(84) Benannte Vertragsstaaten:
**AT BE CH DE FR GB IT LI NL SE**

(56) Entgegenhaltungen:
**EP - A - 0 070 415**
**EP - A - 0 085 344**
**FR - A - 2 519 960**

(73) Patentinhaber: **HOECHST AKTIENGESELLSCHAFT,**
**Postfach 80 03 20, D-6230 Frankfurt am Main 80 (DE)**

(72) Erfinder: **Schimmel, Günther, Dr., Ehrenstrasse 16,**
**D-5042 Erftstadt (DE)**
Erfinder: **Gradl, Reinhard, Dr., Heimbacher Weg 27,**
**D-5042 Erftstadt (DE)**

**Beschreibung**

Die vorliegende Erfindung betrifft ein Verfahren zur Reinigung von Phosphorsäure mit $P_2O_5$-Gehalten von 3 bis 80 Gew.-%, insbesondere zur Entfernung von Ionen des Cadmiums, Kupfers, Quecksilbers, Bleis und Arsens sowie gegebenenfalls von organischen Verbindungen und Schwefelsäure, aus Nassverfahrensphosphorsäure. Dabei wird die Phosphorsäure entweder mit einem Diorganyldithiophosphorsäureester oder mit einem Gemisch aus einem Adsorptionsmittel und diesem Ester oder, vor bzw. nach einer Behandlung mit dem Ester mit dem Adsorptionsmittel allein in Kontakt gebracht und anschliessend die Phase, welche die gereinigte Phosphorsäure enthält, von der den Ester enthaltenden Phase abgetrennt.

Da Phosphorsäuren in erster Linie zur Herstellung von Düngemitteln, Tierfuttermitteln, Waschmitteln usw. verwendet werden, kommt der Entfernung von Ionen des Cadmiums, Kupfers und Arsens aus ihnen grosse ökologische Bedeutung zu.

Schliesslich kann die Entfernung organischer Verunreinigungen sowohl vor einer Extraktionsreinigung als auch einer Fällungsreinigung erforderlich sein, zum einen wegen der störenden Emulsionsbildung, zum anderen wegen der geforderten Reinheit des Endprodukts.

Aus diesem Grunde sind bereits mehrere Verfahren zur Entfernung von Schwermetallen und Arsen aus Nassverfahrensphosphorsäure mit Hilfe von Estern der Dithiophosphorsäure vorbeschrieben. So ist Gegenstand der DE-A-3127900 ein Verfahren zur Extraktion von Schwermetallen aus grünen, bereits von den organischen Verunreinigungen befreiten Phosphorsäuren mittels Lösungen von Diorganyldithiophosphorsäureestern. Dieses Verfahren, das zwangsweise von schon vorgereinigten Säuren ausgeht, hat ferner den Nachteil, sehr aufwendig zu sein wegen der erforderlichen Recyclierung der organischen Phase einschliesslich Waschung, Reextraktion und Aufarbeitung der wässrigen Reextraktphase. Ausserdem sind die erzielbaren Abreicherungen an Arsen unbefriedigend, wie die dort aufgeführten Beispiele zeigen.

Ferner muss die Extraktion bei Raumtemperatur oder wenig darüber stattfinden, da sonst die Verteilungskoeffizienten zu stark absinken. Üblicherweise hat die Säure nach dem Aufschluss und der Vorreinigung von organischen Bestandteilen aus Gründen besserer Filtrierbarkeit aber Temperaturen von 60–80 °C.

Gegenstand der DE-A-3202658 ist ein Verfahren, gemäss dem die Schwermetalle mittels eines Gemisches, bestehend aus Diorganyldithiophosphorsäureester sowie einem Adsorptionsmittel aus der Rohphosphorsäure entfernt werden. Dieses Verfahren ist technisch einfach durchzuführen und kommt ausserdem mit geringen Mengen an Dithiophosphorsäureester aus. Es besitzt jedoch den Nachteil, nur bei Raumtemperatur oder geringfügig darüber genügend niedrige Schwermetallwerte zu liefern. Andererseits ist aber bei diesen niedrigen Temperaturen die Filtrationsleistung unbefriedigend, ebenso auch die Arsen-Abreicherung.

Dem soll nach der DE-A-3227202 dadurch Rechnung getragen werden, dass bei zwei verschiedenen Temperaturen gearbeitet wird, nämlich zuerst bei >50 °C, zur Abtrennung von Arsen, und dann nach Abkühlung auf <50 °C, zur extraktiven Entfernung der Schwermetalle. Diese Arbeitsweise führt zwar zu befriedigend niedrigen Schwermetall- und Arsenwerten in der Phosphorsäure, sie besitzt aber trotzdem zwei Nachteile, nämlich: 1. Das zusätzliche Abkühlen und Wiederaufheizen der Säure bedingt hohe Energiekosten. 2. Die Filtration muss verfahrensbedingt bei niedrigen Temperaturen durchgeführt werden, was eine unbefriedigende Filtrationsleistung zur Folge hat.

Überraschenderweise wurde gefunden, dass sich die eingangs beschriebenen Arbeitsweisen verbessern und deren Nachteile überwinden lassen, wenn man der Phosphorsäure vor der Behandlung mit dem Dithiophosphorsäureester ein Reduktionsmittel zusetzt und man im Falle der Verwendung eines Adsorptionsmittels dieses entweder allein oder in Verbindung mit einer phosphorsäurelöslichen Erdalkaliverbindung einsetzt.

Geeignet als Reduktionsmittel sind alle Stoffe, die in phosphorsaurer Lösung als Reduktionsmittel zu gebrauchen sind, wie z.B. Eisen, Zink, roter Phosphor, Eisen-II-sulfat, Natriumhypophosphit, Hydrazin oder Hydroxymethansulfinate usw. Sie werden etwa in Mengen von 0,1 bis 3,0 Gew.-%, bezogen auf die Phosphorsäuremenge angewendet.

Als Diorganyldithiophosphorsäureester sind die Dialkylester zu empfehlen und zwar solche mit einer mittleren Kettenlänge von 4 bis 12 C-Atomen im Alkylrest, insbesondere die Octyl-, iso-Octyl- oder 2-Ethylhexylester, wobei Mengen von 0,05 bis 0,5 Gew.-%, bezogen auf die Phosphorsäuremenge für die Extraktion ausreichend sind.

Die Adsorptionsmittel können entweder kohlenstoffhaltig sein, wie z.B. Aktivkohle, Russ, ein Adsorberharz aus makroporösem Kunststoff oder silikathaltig, wie Zeolith, Bentonit, Perlit, Diatomeenerde, gefällte Kieselsäure oder ein phosphorsäureunlösliches Calciumsilikat.

Als phosphorsäurelösliche Erdalkaliverbindungen sind Calciumverbindungen, wie Apatit, $CaCO_3$, CaO oder $Ca(OH)_2$ vorzuziehen.

Von den Adsorptionsmitteln werden Mengen von 0,1 bis 2,0 Gew.-%, bezogen auf die Phosphorsäuremenge eingesetzt, die Mengen der Calciumverbindung betragen 0,5 bis 5,0 Gew.-%, ebenfalls bezogen auf die Menge der Phosphorsäure.

Die Art und Menge der eingesetzten Zusatzstoffe richtet sich nach der angewandten Verfahrensweise, der Zusammensetzung der Phosphorsäure sowie den Reinheitsanforderungen. Folgende Verfahrensvarianten sind z.B. bei einer sogenannten «schwarzen Rohsäure» möglich:

1. Nach dem Einrühren des Reduktionsmittels wird die rohe Phosphorsäure mit Aktivkohle und einer Calciumverbindung behandelt und die Mai-

sche filtriert. Das Filtrat wird mit Dialkyldithiophosphorsäureester in reiner Form oder verdünnt mit einem inerten Lösungsmittel behandelt bzw. extrahiert. Danach schliesst sich entweder eine Phasentrennung an, oder im Falle des unverdünnt eingesetzten Esters wird zu der Phosphorsäure ein silikatisches Adsorbens gerührt und die gereinigte Säure durch Filtration gewonnen.

2. In die rohe schwarze Phosphorsäure wird das Reduktionsmittel eingerührt. Anschliessend gibt man den Dithiophosphorsäureester zu und danach das Adsorptionsmittel. Ist die Anforderung an die Phosphorsäure hinsichtlich eines verminderten $C_{org.}$-Gehaltes hoch, wie dies z.B. für eine anschliessende Extraktionsreinigung der Fall ist, so wird man ein kohlenstoffhaltiges Adsorptionsmittel, wie z.B. Aktivkohle und ggf. eine lösliche Calciumverbindung einrühren und vom Schwermetallrückstand und Gips abfiltrieren.

Sind dagegen diese Anforderungen nicht so gross, so wird man ein silikatisches Adsorptionsmittel, z.B. Perlit, einrühren und ebenfalls abfiltrieren. Diese Variante könnte z.B. bei Weiterverwendung der Säure zu Tierfuttermitteln oder Dünger infrage kommen.

Es kann aber auch eine kombinierte Anwendung stattfinden, wobei nach Abtrennung des silikatischen Filterkuchens eine Nachbehandlung mit einem kohlenstoffhaltigen Adsorptionsmittel und ggf. einer Calciumverbindung stattfindet.

Das erfindungsgemässe Verfahren bietet eine Reihe von Vorteilen:

a) Durch die kombinierte Säurebehandlung mit Reduktionsmitteln und Diorganyldithiophosphorsäureester wird die Effektivität der Schwermetallentfernung durch Komplexbildung wesentlich erhöht. Das hat zur Folge, dass die erforderliche Menge an Ester kleiner ist und somit Material gespart wird.

Ferner kann bei höheren Temperaturen (>50 °C) extrahiert werden, ohne dass dabei die Verteilungskoeffizienten zurückgehen. Selbst bei 90 °C wird z.B. unter solchen Bedingungen, bei denen sonst keine Cd-Extraktion mehr stattfindet, nach der Reduktionsbehandlung noch eine 99%ige Cd-Abreicherung erzielt.

b) Durch die Reduktionsmittelbehandlung lässt sich die Entarsenierung wesentlich effizienter gestalten: so kann in konzentrierten Rohsäuren mit $P_2O_5$-Gehalten ≥45 Gew.-% $P_2O_5$ im gesamten Temperaturbereich von 20–100 °C eine wirksame Entarsenierung auf <0,5 ppm erreicht werden. Nach dem Verfahren der DE-A-3227202 gelang dies nur oberhalb 50 °C. Ferner waren die Abreicherungsraten geringer. Bei «filter-grade acid» mit ~ 30 Gew.-% $P_2O_5$, welche häufig ohne Konzentrierungsschritt direkt weiterverarbeitet wird, war selbst das in der genannten Offenlegungsschrift beschriebene Verfahren unzureichend wirksam (vgl. Beispiel). Nach der erfindungsgemässen Reduktion lässt sich selbst eine solche Säure unter allen Bedingungen auf <1 ppm As abreichern.

c) Durch die vorgeschaltete Reduktionsmittelbehandlung steigt die $C_{org.}$-Abreicherungsrate während des Behandlungsschritts mit dem Adsorptionsmittel, insbesondere wenn Aktivkohle eingesetzt wird. Dies ist von grosser Bedeutung, wenn eine schwarze Rohsäure nicht nur von Schwermetallen und Arsen, sondern auch von organischen Verunreinigungen befreit werden soll.

d) Durch die kombinierte Behandlung der erfindungsgemässen Massnahmen lässt sich einfach und mit grosser Wirksamkeit ein hoher Reinigungsgrad erzielen. Es kann aus Phosphorsäuren aller technisch interessanten $P_2O_5$-Konzentrationen von 25–60 Gew.-% $P_2O_5$ bei vorgegebenem, einheitlichem Temperaturniveau eine hinsichtlich Schwermetallen, Arsen und organischen Verunreinigungen optimal vorgereinigte Phosphorsäure hergestellt werden.

Insbesondere für eine sich anschliessende Extraktionsreinigung vorzureinigende Phosphorsäuren können mit dem erfindungsgemässen Verfahren hergestellt werden. Bei gleichmässig hohen Temperaturen von 60–90 °C können nacheinander die Schwermetallabtrennung, die $C_{org.}$-Abreicherung und die Entsulfatisierung vorgenommen werden. Dadurch vereinfacht sich das Verfahren und es kann in einem Temperaturbereich filtriert werden, in dem die Phosphorsäure aufgrund ihrer niedrigeren Viskosität gut filtrierbar ist.

Die nachfolgenden Beispiele sollen die Erfindung näher beschreiben, ohne sie jedoch darauf einzuschränken:

Beispiele 1, 2, 5, 6 (s. Tabelle 1):

Verschiedene Rohphosphorsäuren werden unter den in der Tabelle 1 angegebenen Bedingungen 1 h lang bei 60 °C mit Eisenpulver reduziert, 30 min mit reinem Bis(2-ethylhexyl)-dithiophosphorsäureester sowie anschliessend 5 min mit handelsüblichem Perlit verrührt. Danach wird bei 1 bar Differenzdruck über ein mit einer 8 mm hohen precoat-Schicht (Perlit) belegtes Druckfilter abfiltriert und der Gehalt an Cd, Cu und As im Filtrat bestimmt.

Beispiele 3, 4, 7, 8 (s. Tabelle 1; z. Vergleich):

Es wird wie oben verfahren, ohne dass jedoch eine Reduktionsbehandlung vorgeschaltet ist.

Beispiele 9–12:

Es wird die gleiche Prozedur wie in Beispiel 6 durchgeführt, jedoch werden statt Eisen andere, in Tabelle 2 aufgeführte Reduktionsmittel bei 70 °C in die Säure eingerührt.

Beispiel 13:

Schwarze Florida-Rohphosphorsäure mit 51,5 Gew.-% $P_2O_5$, 4,3 Gew.-% $SO_4$, 10 ppm Cd, 5 ppm As, 7 ppm Cu, 0,03 ppm Hg, 0,2 ppm Pb und 1600 ppm $C_{org.}$ wird 1 h lang bei 60 °C mit 1 Gew.-% Eisenpulver behandelt. Danach werden 3 Gew.-%/$P_2O_5$ handelsübliche Pulver-Aktivkohle und 7 Gew.-%/$P_2O_5$ Kalkhydrat eingerührt und die Mischung 1 h bei 70 °C gerührt. Nach sich anschliessender Druckfiltration besitzt die klare, grüne Säure folgende Daten: 50,3 Gew.-% $P_2O_5$; 0,15 Gew.-% $SO_4$; 10 ppm Cd; 5 ppm As und 130 ppm $C_{org.}$. In diese Säure werden bei 70 °C sukzessive jeweils 15 min lang 0,2% Bis(2-ethylhexyl)-dithiophosphorsäureester und 1 Gew.-% Perlit eingerührt. Anschliessend filtriert man heiss über eine precoat-Schicht aus Perlit. Die gereinigte Säure besitzt folgende Analysenwerte: 50,2% $P_2O_5$; 0,15% $SO_4$; <1 ppm Cd; <0,5 ppm Cu; 0,001 ppm Hg; 0,01 ppm Pb; 0,1 ppm As und 140 ppm $C_{org.}$.

Beispiel 14 (Vergleich):

Es wird wie in Beispiel 13 verfahren, jedoch ohne Zugabe des reduzierenden Eisens. Die gereinigten Säuren haben folgende analytische Daten, wobei in Klammern die Werte der ersten Reinigungsstufe angegeben sind: 50,4 (50,4) Gew.-%

$P_2O_5$; 0,15 (0,15) Gew.-% $SO_4$; 5 (10) ppm Cd; 0,5 (5) ppm As und 470 (440) ppm $C_{org.}$.

Beispiel 15 (Vergleich):

Eine vorgereinigte grüne Marokko-Phosphorsäure (49,8 Gew.-% $P_2O_5$; 0,5 Gew.-% $SO_4$; 110 ppm $C_{org.}$; 24 ppm Cd und 9 ppm As) wird bei 40 °C 20 min lang mit einer 20 Gew.-%igen Lösung von Bis(2-ethylhexyl)dithiophosphorsäureester in Kerosin im Phasenverhältnis A:O = 50:1 extrahiert. Anschliessend lässt man absitzen und untersucht die Säure-Raffinat-Phase. Sie enthält 5 ppm Cd und 5 ppm As.

Beispiel 16:

In Abänderung von Beispiel 15 wird die grüne Säure vor der Extraktion 2 h lang bei 40 °C mit 0,5 Gew.-% Eisenpulver reduziert. Sie enthält nach der Extraktion <1 ppm Cd und 0,2 ppm As.

Tabelle 1

| Beispiel | Säure | Menge in Gew.-%/Säure an | | | Temperatur [°C] | Gehalt in gereinigter Säure | | |
| | | Eisen | Thioester | Perlit | | ppm Cd | ppm As | ppm Cu |
| --- | --- | --- | --- | --- | --- | --- | --- | --- |
| 1 | A | 0,4 | 0,1 | 0,1 | 40 | < 1 | < 1 | < 0,5 |
| 2 | A | 0,4 | 0,1 | 0,1 | 80 | < 1 | 0,3 | < 0,5 |
| 3 | A | 0 | 0,1 | 0,1 | 40 | < 1 | 5 | < 0,5 |
| 4 | A | 0 | 0,1 | 0,1 | 80 | 6 | 4 | 2 |
| 5 | B | 0,5 | 0,2 | 0,5 | 30 | < 1 | 0,5 | < 0,5 |
| 6 | B | 0,5 | 0,2 | 0,5 | 80 | < 1 | 0,2 | < 0,5 |
| 7 | B | 0 | 0,2 | 0,5 | 30 | < 1 | 4 | < 0,5 |
| 8 | B | 0 | 0,2 | 0,5 | 80 | 17 | < 1 | 3 |

A: schwarze Florida-Rohsäure; 29% $P_2O_5$; 6 ppm Cd; 5,5 ppm As; 9 ppm Cu
B: schwarze Marokko-Rohsäure; 52% $P_2O_5$; 22 ppm Cd; 8 ppm As; 39 ppm Cu

Tabelle 2

| Beispiel | Reduktionsmittel | | Gehalt in behandelter Säure | |
| | Art | Menge in Gew.-%/ Säure | ppm Cd | ppm As |
| --- | --- | --- | --- | --- |
| 9 | Eisen(II)sulfat | 0,6 | <1 | 0,5 |
| 10 | Rongalit | 0,2 | <1 | 0,1 |
| 11 | roter Phosphor | 0,6 | <1 | 0,5 |
| 12 | Zink | 0,6 | <1 | 0,1 |

**Patentansprüche**

1. Verfahren zur Reinigung von Phosphorsäure mit $P_2O_5$-Gehalten von 3 bis 80 Gew.-%, insbesondere zur Entfernung von Ionen des Cadmiums, Kupfers, Quecksilbers, Bleis und Arsens, sowie gegebenenfalls von organischen Verbindungen und Schwefelsäure aus Nassverfahrensphosphorsäure, indem man die Phosphorsäure entweder mit einem Diorganyldithiophosphorsäureester, oder mit einem Gemisch aus einem Adsorptionsmittel und diesem Ester, oder vor bzw. nach einer Behandlung mit dem Ester mit dem Adsorptionsmittel allein in Kontakt bringt und anschliessend die Phase, welche die gereinigte Phosphorsäure enthält, von der den Ester enthaltenden Phase abtrennt, dadurch gekennzeichnet, dass man der Phosphorsäure vor der Behandlung mit dem Dithiophosphorsäureester ein Reduktionsmittel zusetzt und man im Falle der Verwendung eines Adsorptionsmittels, dieses entweder allein oder in Verbindung mit einer phosphorsäurelöslichen Erdalkaliverbindung einsetzt.

2. Verfahren nach Anspruch 1, dadurch gekennzeichnet, dass man als Reduktionsmittel Eisen, Zink, roten Phosphor, Eisen-II-sulfat, Natriumhypophosphit, Hydrazin oder Hydroxymethansulfinate einsetzt.

3. Verfahren nach Anspruch 1 oder 2, dadurch gekennzeichnet, dass man als Adsorptionsmittel ein kohlenstoffhaltiges Mittel, wie Aktivkohle, Russ, ein Adsorberharz und/oder ein silikathaltiges Mittel, wie Zeolith, Bentonit, Perlit, Diatomeenerde, gefällte Kieselsäure oder ein phosphorsäureunlösliches Calciumsilikat einsetzt.

4. Verfahren nach einem der Ansprüche 1 bis 3, dadurch gekennzeichnet, dass man als phosphorsäurelösliche Erdalkaliverbindung Apatit, $CaCO_3$, CaO oder $Ca(OH)_2$ einsetzt.

5. Verfahren nach einem der Ansprüche 1 bis 4, dadurch gekennzeichnet, dass man die Phosphorsäure nacheinander mit einem kohlenstoff-und einem silikathaltigen Adsorptionsmittel oder umgekehrt in Kontakt bringt und vor der Zugabe des folgenden Adsorptionsmittels vorhandene Feststoffe abtrennt.

6. Verfahren nach einem der Ansprüche 1 bis 5, dadurch gekennzeichnet, dass man das Reduktionsmittel in eine Menge von 0,1 bis 3,0 Gew.-%, bezogen auf die Phosphorsäuremenge zusetzt.

7. Verfahren nach einem der Ansprüche 1 bis 6, dadurch gekennzeichnet, dass man Temperaturen von 60 bis 90 °C einhält.

8. Verfahren nach einem der Ansprüche 1 bis 7, dadurch gekennzeichnet, dass man den Dithiophosphorsäureester in einer Menge von 0,05 bis 0,5 Gew.-%, bezogen auf die Phosphorsäuremenge einsetzt.

9. Verfahren nach einem der Ansprüche 1 bis 8, dadurch gekennzeichnet, dass man das Adsorptionsmittel in einer Menge von 0,1 bis 2,0 Gew.-%, bezogen auf die Phosphorsäuremenge einsetzt.

## Claims

1. A process for purifying phosphoric acid having a $P_2O_5$ content of 3 to 80% by weight, particularly for removing ions of cadmium, copper, mercury, lead and arsenic, and also, if necessary, organic compounds and sulfuric acid from wet process phosphoric acid by bringing the phosphoric acid into contact with either a diorganyl dithiophosphate or with a mixture consisting of an adsorbent and the said phosphate, or bringing it into contact with only the adsorbent either before or after treatment with the phosphate and then separating the phase which contains the purified phosphoric acid from that which contains the phosphate, which comprises adding a reducing agent to the phosphoric acid before treating it with the dithiophosphate and, if an adsorbent is used, employing this adsorbent either by itself or together with a phosphoric acid-soluble alkaline earth compound.

2. The process as claimed in claim 1, wherein the reducing agent employed is iron, zinc, red phosphorus, ferrous sulfate, sodium hypophosphite, hydrazine or hydroxymethanesulphinates.

3. The process as claimed in claim 1 or 2, wherein the adsorbent employed is a carbon-containing material, such as activated charcoal, carbon black, an adsorber resin and/or a silicate-containing material, such as zeolite, bentonite, perlite, diatomaceous earth, precipitated silica or a phosphoric acid-insoluble calcium silicate.

4. The process as claimed in any of claims 1 to 3, wherein the phosphoric acid-soluble alkaline earth metal compound employed is apatite, $CaCO_3$, $CaO$ or $Ca(OH)_2$.

5. The process as claimed in any of claims 1 to 4, wherein the phosphoric acid is successively brought into contact with a carbon- and a silicate-containing adsorbent or vice versa and, before adding the next adsorbent, any solids are separated off.

6. The process as claimed in any of claims 1 to 5, wherein the reducing agent is added in an amount of 0.1 to 3.0% by weight, relative to the amount of phosphoric acid.

7. The process as claimed in any of claims 1 to 6, wherein temperatures from 60 to 90 °C are maintained.

8. The process as claimed in any of claims 1 to 7, wherein the dithiophosphate is employed in an amount of 0.05 to 0.5% by weight, relative to the amount of phosphoric acid.

9. The process as claimed in any of claims 1 to 8, wherein the adsorbent is employed in an amount of 0.1 to 2.0% by weight, relative to the amount of phosphoric acid.

## Revendications

1. Procédé pour la purification de l'acide phosphorique ayant des teneurs en $P_2O_5$ de 3 à 80% en poids, en particulier pour l'élimination des ions de cadmium, de cuivre, de mercure, de plomb et d'arsenic ainsi éventuellement que des composés organiques et de l'acide phosphorique, de l'acide phosphorique du procédé par voie humide, dans lequel on met en contact l'acide phosphorique soit avec un dithiophosphate de diorganyle, soit avec un mélange d'un agent adsorbant et de cet ester, soit avec l'agent adsorbant seul avant ou après un traitement par l'ester, et ensuite on sépare la phase qui contient l'acide phosphorique purifié de la phase contenant l'ester, caractérisé en ce que l'on ajoute un agent réducteur à l'acide phosphorique avant le traitement par l'ester dithiophosphorique et, dans le cas de l'utilisation d'un agent adsorbant, on utilise celui-ci soit seul soit en combinaison avec un composé alcalino-terreux soluble dans l'acide phosphorique.

2. Procédé selon la revendication 1, caractérisé en ce que l'on utilise comme agent réducteur le fer, le zinc, le phosphore rouge, le sulfate de fer II, l'hypophosphite de sodium, l'hydrazine ou des hydroxyméthanesulfinates.

3. Procédé selon la revendication 1 ou 2, caractérisé en ce que l'on utilise comme agent adsorbant un agent carboné tel que charbon actif, noir de fumée, une résine adsorbante et/ou un agent silicaté tel que zéolite, bentonite, perlite, terre d'infusoires, acide silicique précipité ou un silicate de calcium soluble dans l'acide phosphorique.

4. Procédé selon l'une des revendications 1 à 3, caractérisé en ce que l'on utilise comme composé alcalino-terreux soluble dans l'acide phosphorique l'apatite, $CaCO_3$, $CaO$ ou $Ca(OH)_2$.

5. Procédé selon l'une des revendications 1 à 4, caractérisé en ce que l'on met en contact l'acide phosphorique successivement avec un agent adsorbant carboné et un agent adsorbant silicaté ou inversement et on sépare les solides présents avant l'addition de l'agent adsorbant suivant.

6. Procédé selon l'une des revendications 1 à 5, caractérisé en ce que l'on ajoute l'agent réducteur en quantité de 0,1 à 3,0% en poids, par rapport à la quantité d'acide phosphorique.

7. Procédé selon l'une des revendications 1 à 6, caractérisé en ce qu'on maintient des températures de 60 à 90 °C.

8. Procédé selon l'une des revendications 1 à 7, caractérisé en ce que l'on utilise l'ester dithio-phosphorique en quantité de 0,05 à 0,5% en poids, par rapport à la quantité d'acide phosphorique.

9. Procédé selon l'une des revendications 1 à caractérisé en ce que l'on utilise l'agent adsorba en quantité de 0,1 à 2,0% en poids, par rapport la quantité d'acide phosphorique.